# EUROPÄISCHE PATENTANMELDUNG

(11) **EP 2 146 124 A1**
(43) Veröffentlichungstag der Anmeldung: **20.01.2010**
(21) Anmeldenummer: 08012760.8
(22) Anmeldetag: 15.07.2008
(51) Int. Cl.: F16K 39/02

(54) **Steuerventil**

(71) Anmelder: Carl Freudenberg KG, 69469 Weinheim (DE)
(72) Erfinder: Imlauer, Markus, 83624 Otterfing (DE); Luxem, Andreas, 56333 Winningen (DE); Käsler, Richard, Dr., 53424 Remagen (DE)

(57) **Zusammenfassung**

Steuerventil mit einem Regelsitzventil, das aus einem von einem Zylinder eingefassten Regelventilkolben mit daran angeordnetem Ventilkegel besteht, wobei der Ventilkegel mit einer Innenkante des Zylinders den Ventilsitz bildet, wobei das Regelsitzventil 1 mit einem Schaltventil 2 zum Schalten des Druckausgleichs der Druckflüssigkeit des Regelventilkolbens 3 zwischen den Druckkammern 13, 25 versehen ist.

## Beschreibung

### Technisches Gebiet

Die Erfindung befasst sich mit einem Steuerventil mit einem Regelsitzventil, das aus einem Zylinder eingefassten Regelventilkolben und daran angeordnetem Ventilkegel besteht, wobei der Ventilkegel mit einer Innenkante des Zylinders den Regelventilsitz bildet.

Zur feinfühligen Steuerung von hydraulischen Vorrichtungen werden Steuerventile verwendet, um den Durchfluss der Druckflüssigkeit zu regeln. Hier haben sich insbesondere Proportionalventile bewährt, bei denen ein schwimmender Regelventilkolben in Längsrichtung verschoben wird. Durch Integration eines Ventilkegels am Regelventilkolben gelingt es in einer Position des Regelventilkolbens, eine Abdichtung der Druckräume untereinander zu erreichen.

### Stand der Technik

Durch die DE 10 2005 014 866 A1 ist ein Steuerventil bekannt geworden, welches für unterschiedliche Einsatzbereiche eingesetzt werden kann. Hier wird ein von zwei Kammern begrenzter Kolben verwendet, der schwimmend in einem Zylinder geführt ist. In Schließstellung wird der Kolben durch eine Regelfeder gedrückt, während die Regeleinstellungen des Kolbens über ein Betätigungselement erfolgen, das elektrisch angetrieben wird. Um eine druckunabhängige Regelung durchführen zu können, sind Zu- und Abfluss zum Steuerventil mit Drucksensoren versehen.

### Darstellung der Erfindung

Der Erfindung liegt die Aufgabe zugrunde, ein Steuerventil zu schaffen, bei dem der Druckausgleich zwischen den Druckkammern des Regelventilkolbens gesteuert werden kann. Das Steuerventil soll in seinem Aufbau einfach gehalten sein und über eine große Betriebssicherheit verfügen.

Die Lösung der gestellten Aufgabe erfolgt mit den Merkmalen des Anspruchs 1. Die Unteransprüche 2 bis 24 stellen vorteilhafte Ausgestaltungen des Erfindungsgegenstands dar.

Bei dem Steuerventil der eingangs genannten Gattung wird erfindungsgemäß das Regelsitzventil mit einem Schaltventil versehen, über das der Druckausgleich zwischen den Druckkammern des Steuerkolbens herstellbar ist. Dieses Schaltventil kann zu- bzw. abgeschaltet werden, um den Druckausgleich herzustellen. Bevorzugt wird dabei das Regelsitzventil mit dem Vorsteuerventil zu einer Einheit zusammengefasst. Das zum Einsatz gelangende Regelventil ist mit einem Regelventilkolben versehen, der über eine Druckfeder und den Druck in dem Druckraum in seine Schließstellung gedrückt wird. Dabei gelangt der Ventilkegel an den Ventilsitz und schließt den Durchfluss für die Druckflüssigkeit ab. Die Druckfeder und der Ventilkegel befinden sich in einer ersten Druckkammer für den Zu- oder Abfluss der Druckflüssigkeit. Der Regelvenfilkolben hat einen Durchlass, welcher die erste Druckkammer mit einer zweiten Druckkammer verbindet. Die zweite Druckkammer befindet sich nicht unmittelbar an der Kolbenstirnfläche sondern außerhalb derselben an der Stirnfläche des Schaltkolbens. Der Schaltkolben des Steuerventils ist in den zentralen Durchlass des Regelventilkolbens eingesetzt. Es handelt sich hier ebenfalls um einen schwimmenden Steuerventilkolben, der in der Bohrung des Zylinderbodens geführt ist. Zwischen der Innenseite des Zylinderbodens und der Oberfläche des Regelventilkolbens ist ein Zwischenraum vorgesehen, in dem der Ventilkegel des Schaltkolbens sich frei bewegen kann. Die Bewegung des Ventilkegels ist durch den Schaltkolbensitz an einer Innenkante des Zylinderbodens und der Oberfläche des Regelventilkolbens begrenzt. Dieser Zwischenraum ist mit einer Ablassbohrung versehen, so dass der Zwischenraum drucklos ist. An der Unterseite des Ventilkegels des Schaltkolbens ist ein Führungsstutzen angebracht, der axial beweglich in dem Durchlass im Steuerventil eingesetzt ist. Am Führungsstutzen liegt eine Druckfeder an, welche den Schaltkolben in seine Schließstellung drückt. Der Schaltkolben mitsamt dem Führungsstutzen hat eine zentrale Bohrung, über die in Fortsetzung des Durchlasses im Regelventilkolben der Druckausgleich zwischen der ersten und der zweiten Druckkammer hergestellt wird.

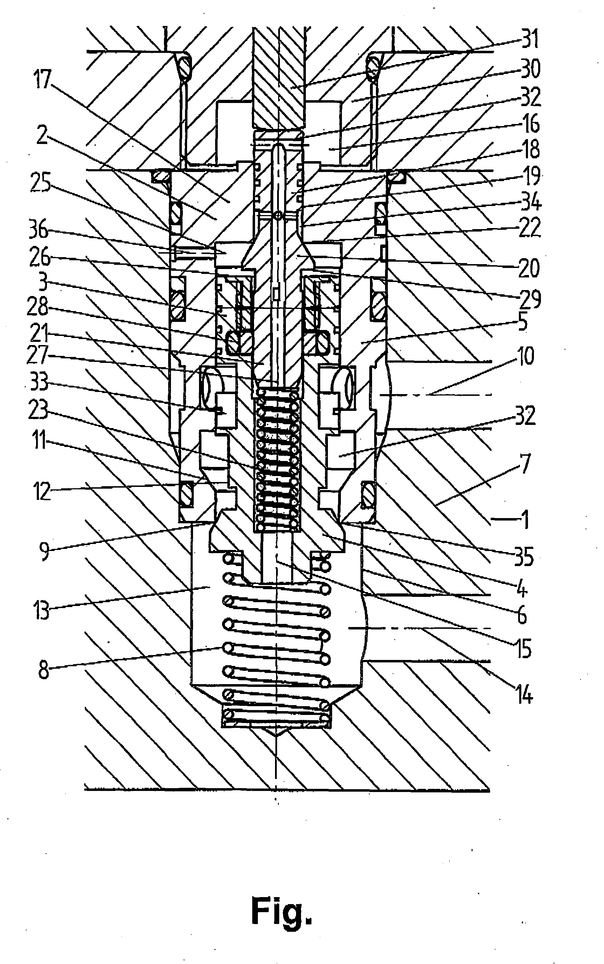

### Kurzbeschreibung der Zeichnung

Anhand eines in der Zeichnung dargestellten Ausführungsbeispiels wird die Erfindung nachstehend näher erläutert.

Die Figur zeigt einen Schnitt durch das Regelsitzventil mit einem Schaltventil.

### Ausführung der Erfindung

Das Steuerventil besteht aus einem Regelsitzventil 1 und dem Schaltventil 2. Das Regelsitzventil 1 hat den schwimmenden Regelventilkolben 3 mit dem daran angeordneten Ventilkegel 4. Der Kolben 3 ist in dem Zylinder 5 untergebracht. Der Zylinder 5 selbst ist in der Ausnehmung 6 in dem Gehäuse 7 eingesetzt. Der Regelventilkolben 3 (mit Regelventilkolben ist hier die Gesamtheit von Kolben 3 mit Ventilkegel 4 und Steuerkanten 33 zu verstehen) wird in seine Schließstellung durch die Druckfeder 8 und den Druck im Druckraum 13 gedrückt. Dabei liegt der Ventilkegel 4 mit seiner konischen Fläche an der am Zylinder 5 gebildeten Kante 9 an. Hierdurch wird der durch die Öffnung 10 ein- bzw. austretende Druckmittelfluss unterbrochen. Bei geöffnetem Regelventil fließt die Druckflüssigkeit über in der Wandung 11 des Zylinders 5 und in dem Stößel 12 des Regelkolbens vorhandene Ausnehmungen, die Druckkammer 13 und über die Öffnung 14 zu bzw. vom Regelventil zu bzw. von der zu steuernden Vorrichtung. Über den im Regelkolben 3 enthaltenen Durchlass 15 gelangt die Druckflüssigkeit in die zweite Druckkammer 16. In den Durchlass 15 des Regelkolbens 3 und einen entsprechenden Durchlass 19 im Zylinderboden 17 ist das Schaltventil 2 eingesetzt. Dieses Schaltventil 2 besteht aus dem Schaltkolben 18, der in die Bohrung 19 des Zylinderbodens 17 eingesetzt ist, sowie dem Ventilkegel 20 und dem Führungsstutzen 21. Der Ventilkegel 20 liegt mit seiner konisch ausgebildeten Oberfläche an der Innenkante 22 des Zylinderbodens 17 an und bildet dort den Ventilsitz. Durch die Schließfeder 23 wird der Schaltkolben 18 in seine Schließstellung gedrückt, bei der der Ventilkegel 20 schließt. Der Raum 25 wird durch die Oberfläche 26 des Regelventilkolbens 3 begrenzt. Der Schaltkolben 18 mitsamt dem Ventilkegel 20 und dem Führungsstutzens 21 hat eine zentrale Bohrung 27, welche den Durchlass 15 aus der ersten Druckkammer 13 in die zweite Druckkammer 16 fortführt. Der Stutzen 21 ist von einer gesonderten Dichtung 28 umgeben. In der in der Figur gezeigten Lage des Steuerventils liegt der Ventilkolben 20 des Vorsteuerventils 2 an der Innenkante 22 des Zylinderbodens 17 an. In den Druckkammern 13 und 16 liegt ein gleicher Druck vor. Der vom Ventilkegel 20 und der Innenkante 22 gebildete Schaltkolbensitz 34, schließt die Druckkammer 16 gegenüber dem Raum 25 ab. Abgesperrt ist auch die die Öffnung 10 und der Raum 33 durch den Steg 34. Der durch die Kante 9 und den Ventilkegel 4 gebildete Regelkolbensitz 35 sperrt den Raum 32 gegenüber der Druckkammer 13 ab. Die Dichtung 28 dichtet die Druckkammer 13 zum Raum 25 ab. Der Raum 25 ist über die Bohrung 36 druckentlastet, so dass er bei geschlossenem Schaltkolbensitz 34 drucklos ist. In die Bohrung 36 ist ein nicht näher gezeigtes mengenabhängiges Ventil oder auch eine Drossel bzw. Blende eingesetzt, mit der Folge, dass bei geöffnetem Schaltkolbensitz 34 sich ein Druck im Raum 25 aufbaut.

Die Durchmesser d an der Dichtung 28 und am Schaltkolbensitz 34 sind identisch, so dass an beiden Enden des Schalkolbens 18 des Vorsteuerventils 2 die gleiche entgegengesetzte Kraft in Axialrichtung am Schaltkolben 18 wirkt. Hierdurch wird ein Druckausgleich hergestellt. Wird der Stöpsel 31 des Elektroantriebs 30, auf der Zeichnung gesehen, nach unten bewegt, so wird ein Durchfluss aus der Druckkammer 16 in den Raum 25 über den Durchlass 15 hergestellt. Dadurch baut sich im Raum 25 der gleiche Druck auf, wie er in den Druckkammern 13 und 16 vorliegt. Da auf beiden Seiten des Regelkolbens 3 jetzt der gleiche Druck auf gleich großen Druckflächen vorliegt, kann der Regelkolben 3 über den Schaltkolben 18 verstellt werden. Letzterer liegt nach einem kurzen Hub mit reiner Anschlagfläche 29 an der oberen Seite des Regelkolbens 3 an. Sobald der Stößel 31 zurückgezogen wird bewegt sich der Schaltkolben 18 durch den Druck der Feder 23 nach oben, der Schaltkolbensitz 34 wird geschlossen, der Raum 35 entlüftet und der Regelkolben 3 wird durch die Feder 8und den Druck im Druckraum 13 in seine Schließstellung gedrückt. Auf diese Weise wird durch das Schaltventil 2 der Druck der Flüssigkeit in den Druckkammern 13 und 16 zum Raum 25 an- bzw. abgeschaltet. Nur bei vollständigem Druckausgleich am Regelventil 1 kann dasselbe über einen Magnetantrieb bewegt werden.

## Patentansprüche

1. Steuerventil mit einem Regelsitzventil, das aus einem von einem Zylinder eingefassten Regelventilkolben mit daran angeordnetem Ventilkegel besteht, wobei der Ventilkegel mit einer Innenkante des Zylinders den Regelventilsitz bildet, **dadurch gekennzeichnet, dass** das Regelsitzventil (1) mit einem Schaltventil (2) zum Schalten des Druckausgleichs des Regelventilkolbens (3) zwischen den Druckkammern (13, 16, 25) versehen ist.

2. Steuerventil nach Anspruch 1, **dadurch gekennzeichnet, dass** das Regelsitzventil (1) mit dem Schaltventil (2) zu einer Einheit zusammengefasst ist.

3. Steuerventil, nach einem der Ansprüche 1 oder 2, **dadurch gekennzeichnet, dass** das Schaltventil (2) einen Schaltkolben (18) hat.

4. Steuerventil nach einem der Ansprüche 1 bis 3, **dadurch gekennzeichnet, dass** der Regelventilkolben(3) und der Schaltkolben (18) des Schaltventils (2) über einen Elektroantrieb betätigt werden.

5. Steuerventil nach einem der Ansprüche 1 bis 4, **dadurch gekennzeichnet, dass** der Regelventilkolben (3) durch eine Druckfeder (8) in seine Schließstellung gedrückt wird.

6. Steuerventil nach einem der Ansprüche 1 bis 5, **dadurch gekennzeichnet, dass** der Regelventilkolben (3) einen zentralen Durchlass (15) hat, über den die Kammern (13, 16) für die Druckflüssigkeit hydraulisch verbunden sind.

7. Steuerventil nach einem der Ansprüche 1 bis 6, **dadurch gekennzeichnet, dass** das Schaltventil (2) einen Führungsstutzen (21) hat, der in den zentralen Durchlass (15) des Regelventils (3) eingesetzt ist.

8. Steuerventil nach einem der Ansprüche 1 bis 7, **dadurch gekennzeichnet, dass** das Schaltventil (2) einen Steuerventilkolben (18) hat, der in einer Bohrung (19) des Zylinderbodens (17) gehalten ist.

9. Steuerventil nach einem der Ansprüche 1 bis 8, **dadurch gekennzeichnet, dass** der Schaltkolben (18) einen Ventilkegel (20) hat, der mit einer Innenkante (22) des Zylinderbodens (17) den Steuerventilsitz bildet.

10. Steuerventil nach einem der Ansprüche 1 bis 9, **dadurch gekennzeichnet, dass** an den Ventilkegel (20) des Schaltkolbens (18), der axial beweglich in den Durchlass (15) im Regelsitzventil (1) eingesetzte Führungsstutzen (21) anschließt.

11. Steuerventil nach einem der Ansprüche 1 bis 10, **dadurch gekennzeichnet, dass** der Schaltkolben (18) durch eine im Durchlass (15) eingesetzte Druckfeder (23) in seine Schließstellung gedrückt wird.

12. Steuerventil nach einem der Ansprüche 1 bis 11, **dadurch gekennzeichnet, dass** der Schaltkolben (18) durch einen elektrischen Antrieb (30) verstellt wird.

13. Steuerventil nach einem der Ansprüche 1 bis 12, **dadurch gekennzeichnet, dass** der Ventilkegel (20) des Schaltkolbens (18) auf seiner dem Steuerventilsitz abgewandten Seite mit einer Anschlagfläche (29) versehen ist, die bei geschlossenem Schaltventil (2) mit Abstand zur Oberfläche (26) des Regelventilkolbens (3) angeordnet ist.

14. Steuerventil nach einem der Ansprüche 1 bis 13, **dadurch gekennzeichnet, dass** der Schaltkolben (18) eine zentrale Bohrung (27) hat.

15. Steuerventil nach einem der Ansprüche 1 bis 14, **dadurch gekennzeichnet, dass** der Schaltkolben (18) einen Ansatz (32) hat, der in den zweiten Regeldruckraum (16) ragt und an dem der Steuerstößel (31) des elektrischen Antriebs (30) anliegt.

16. Steuerventil nach einem der Ansprüche 1 bis 15, **dadurch gekennzeichnet, dass** der Ventilkegel (20) des Schaltkolbens (18) in einem Druckablassraum (25) untergebracht ist.

17. Steuerventil nach einem der Ansprüche 1 bis 16, **dadurch gekennzeichnet, dass** der Führungsstutzen (21) von einer Dichtung (28) umfasst ist.

18. Steuerventil nach einem der Ansprüche 1 bis 17, **dadurch gekennzeichnet, dass** der Zylinder (5) mit dem Regelventil (1) und dem Schaltventil (2) in eine Bohrung (6) in ein Gehäuse (7) einfügbar ausgebildet ist.

19. Steuerventil nach einem der Ansprüche q bis 18, **dadurch gekennzeichnet, dass** der Druckraum (25) über die Bohrung (36) druckentlastet werden kann.

20. Steuerventil nach einem der Ansprüche 1 bis 19, **dadurch gekennzeichnet, dass** die Entlastung des Druckraums (25) über die Bohrung (26) durch eine Düse oder eine Blende im Volumenstrom begrenzt wird.

21. Steuerventil nach einem der Ansprüche 1 bis 20, **dadurch gekennzeichnet, dass** die Entlastung des Druckraums (25) über die Bohrung (36) durch ein volumenstromabhängiges Ventil geregelt und/oder geschaltet werden kann.

22. Steuerventil nach einem der Ansprüche 1 bis 21, **dadurch gekennzeichnet, dass** der Ventilsitz (4) des Regelkolbens (3) räumlich von der Steuerkante (33) getrennt ist.

23. Steuerventil nach Anspruch 22, **dadurch gekennzeichnet, dass** zwischen Ventilsitz (4) und Regelkante (33) eine positive Überdeckung vorhanden ist.

24. Steuerventil nach einem der Ansprüche 21 bis 22, **dadurch gekennzeichnet, dass** der Volumenstrom über den Regelkolben (3) durch geformte Nuten im Bereich der Regelkante (33) erfolgt.
